# EUROPEAN PATENT APPLICATION

(11) **EP 4 502 822 A1**
(43) Date of publication of application: **05.02.2025**
(21) Application number: 23189846.1
(22) Date of filing: 04.08.2023
(51) Int. Cl.: G06F 16/21

(54) **METHOD AND SYSTEM FOR MANAGING DATA MODELS**

(71) Applicant: Siemens Industry Software NV, 1930 Zaventem (BE)
(72) Inventor: N A, Akshobhya, 560085 Bengaluru (IN); Kumar, Abhay, 560100 Bangalore (IN); Ramanath, Vinay, 560070 Bengaluru (IN); Bertheaume, Clement, 3001 Heverlee (BE); Menu, Jonathan, 3018 Wijgmaal (BE); Satpati, Anish, 400094 Mumbai (IN); Praharaj, Amlan, 751014 Bhubaneswar (IN)
(74) Representative: Isarpatent

(57) **Abstract**

A method (200) and a system (300) for managing a data model (100A-100C) are disclosed. The method involves extracting characteristic sets (600) from each of the versions, where a characteristic set groups objects that share common properties. The characteristic sets are then organized in a hierarchical manner based on the shared properties, with the characteristic sets sharing a relatively greater number of properties are placed higher in the corresponding hierarchical order and vice-versa, forming two characteristic set lattices (700) for the respective versions of the data model. The comparison function is applied to identify the differences between a first characteristic set lattice (810) and a second characteristic set lattice (820). A difference report is generated based on the comparison, providing an overview of the additions, deletions, and modifications that occurred between the two versions of the data model.

## Description

The present invention relates generally to the field of data management, and more particularly, to systems and methods for managing data models, such as simulation models.

In many fields, including software development, scientific research, and engineering, it is common to create, modify, and utilize complex data models to represent, understand, and predict various phenomena. These models often evolve over time, as they are iteratively developed and updated to reflect new data, improved understanding, or different requirements. As these data models change, it may be required to understand what specific modifications have been made between versions. For example, a software developer may need to understand the differences between two versions of a codebase, or a design engineer may need to understand the changes made to a simulation model to better interpret the results.

Traditional methods for comparing different versions of data models often rely on textual or binary diff tools, which are inadequate for complex hierarchical data models as they do not adequately consider the hierarchical nature and semantics of the data models. These tools often result in unstructured and difficult-to-understand outputs, as they fail to consider the conceptual relationships between different components of the data model. Moreover, the traditional methods do not effectively handle the case where the same subjects appear multiple times in the data model, each time associated with different properties. These solutions typically do not provide a way to differentiate between these instances, leading to inaccurate or incomplete difference reports.

The available solutions for identifying differences can be broadly classified into three categories: Text-based diffing, Notebook-based diffing, Tree-based diffing. Text-based diffing relies on a line-by-line scan of two versions, examining each corresponding line pair for differences. While this method is adequate for simple files, such as those containing program codes, it proves inefficient for complex models with potentially vast numbers of differences and large sizes. Notebook-based diffing method leverages the Jupyter notebook format for identifying changes. As Jupyter allows for content alteration within a code-block and result extraction, it is employed to detect syntactically different information pieces. Although faster than text-based diffing, notebook-based diffing carries its limitations. Not all system models can be converted into a .ipynb file, and even if possible, the method's efficiency and results are insufficient when dealing with large-sized models. Presently considered the state-of-the-art solution, tree-based diffing, available in tools like the Graphtage python package, provides semantic comparison between two versions by using the concept of nodes and edges. Nodes correspond to the subjects and objects, while edges represent the properties linking the nodes. Graphtage uses tree structures to transform data into JSON representation. It segregates the data into objects and properties in the JSON format before comparing the two versions to determine their differences. Despite being highly effective for small to medium diffing tasks, its performance drops dramatically with growing differences and file sizes, leading to unreasonable processing times. Medium-sized tasks can take up to three or more hours, or even fail entirely, making this method unsuitable for large-scale tasks.

In light of the above, there is a need for a solution capable of accurately detecting all differences, thereby enabling users to utilize this information effectively and efficiently. The demand for such solution is widespread across various industries that deal with intricate configurations and require fast and accurate comparison tools.

One prominent field that faces this challenge is that of simulations and digital design. In this domain, multiple engineers may collaborate to create countless versions (or configurations) of a parent data model, each aiming to achieve the best possible results. These data models often encompass a broad range of elements, including Computer-Aided Design (CAD) parameters, simulation parameters, and other configurations. When these versions are subjected to certain processes, they may yield a variety of outcomes. To determine the reasons for these differing results, it is required to first identify the variances in the versions of the data models. However, this becomes a significant technical challenge when dealing with extremely complex data models (as discussed above). Thus, the need for an effective 'diffing' solution, one that can accurately pinpoint differences in highly complex data models, serves as a motivation for the proposed invention presented herein.

In the context of the present invention, "diffing" refers to the computational process of identifying and highlighting the differences between two versions of a data model. The diffing process identifies differences at various hierarchical levels of the two versions of the data model being compared, thereby offering a comprehensive depiction of the modifications made. The diffing process extends beyond simply highlighting added or removed elements, and also identifies alterations to existing properties, object substitutions, and even changes in the hierarchical relationships between properties. Therefore, in general, diffing serves as a tool for tracking changes, updates, and revisions in data models, thereby providing better understanding and efficient management of complex systems.

The present invention proposes a technique of diffing based on formal concept analysis (FCA). This technique creates a clear representation of the input data model called a characteristic set (CS) lattice, which encapsulates the relationships between different data entities. The present invention for diffing utilizes this CS lattice to quickly and efficiently identify differences between versions of a model. The main advantages of the present invention over existing solutions are its efficiency and accuracy. Unlike existing methods, the FCA-based diffing technique operates within seconds, even for complex real-world data sets; and thus avoids the time-consuming line-by-line comparison employed by other methods, instead processing the data into subject, property, and object triples before calculating differences. This results in significant time and resource savings.

The object of the present invention is achieved by a computer-implemented method for managing a data model. The method comprises obtaining, by a processor, a first version of the data model and a second version of the data model. Herein, each of the first version of the data model and the second version of the data model comprises a collection of object-property-subject triples. The method further comprises extracting, by the processor, characteristic sets from each of the first version of the data model and the second version of the data model. Herein, each characteristic set groups objects sharing a common set of properties. The method further comprises arranging, by the processor, the characteristic sets for each of the first version of the data model and the second version of the data model in a respective hierarchical order. Herein, the characteristic sets sharing a relatively greater number of properties are placed higher in the corresponding hierarchical order and the characteristic sets sharing a relatively lesser number of properties are placed lower in the corresponding hierarchical order, forming a first characteristic set lattice and a second characteristic set lattice respectively. The method further comprises comparing, by the processor, the first characteristic set lattice to the second characteristic set lattice by using a comparison function for identifying differences between the first version of the data model and the second version of the data model. The method further comprises generating and outputting, by the processor, via an output device, a difference report based on the comparison.

In one or more embodiments, the step of arranging the characteristic sets in the hierarchical order further comprises applying, by the processor, a first function when a level 'i' and a level `j' are adjacent. Herein, for each characteristic set in the 'jth' level, a property is removed and if the remaining properties are found in the 'ith' level, appending the objects and properties of the corresponding characteristic set in the 'ith' level to the corresponding one of the first characteristic set lattice and the second characteristic set lattice. This step further comprises applying, by the processor, a second function when the level 'i' and the level 'j' are not adjacent. Herein, for each characteristic set in the 'ith' level, rarest property is identified and if the rarest property is not present in any of the characteristic sets of the 'jth' level, adding the objects and properties of the corresponding characteristic set of the 'jth' level along with the rarest property to the corresponding one of the first characteristic set lattice and the second characteristic set lattice.

In one or more embodiments, arranging the characteristic sets in the hierarchical order further comprises creating, by the processor, a virtual null object having all of the properties to be placed at a top of each of the first characteristic set and the second characteristic set and a virtual null object having no property at a bottom of each of the first characteristic set and the second characteristic set.

In one or more embodiments, the comparison function is configured to differentiate between the identified differences at different levels of the hierarchical orders of the respective first characteristic set lattice and the second characteristic set lattice.

In one or more embodiments, the difference report comprises the identified differences in the form of one or more of additions, deletions, and modifications between the first version of the data model and the second version of the data model.

In one or more embodiments, the method further comprises generating, by the processor, a lookup table to track a location and/or a nature of the identified differences in the hierarchical orders of the respective first characteristic set lattice and the second characteristic set lattice. Herein, the lookup table records the location and/or the nature of identified differences between the first characteristic set lattice and the second characteristic set lattice.

The object of the present invention is also achieved by a system for managing a data model. The system comprises an input module configured to obtain a first version of the data model and a second version of the data model. Herein, each of the first version of the data model and the second version of the data model comprises a collection of object-property-subject triples. The system further comprises a processor. The processor is configured to extract characteristic sets from each of the first version of the data model and the second version of the data model. Herein, each characteristic set groups objects sharing a common set of properties. The processor is further configured to arrange the characteristic sets for each of the first version of the data model and the second version of the data model in a respective hierarchical order. Herein, the characteristic sets sharing a relatively greater number of properties are placed higher in the corresponding hierarchical order and the characteristic sets sharing a relatively lesser number of properties are placed lower in the corresponding hierarchical order, forming a first characteristic set lattice and a second characteristic set lattice respectively. The processor is further configured to compare the first characteristic set lattice to the second characteristic set lattice by using a comparison function for identifying differences between the first version of the data model and the second version of the data model. The processor is further configured to generate and output a difference report based on the comparison.

In one or more embodiments, for arranging the characteristic sets in the hierarchical order, the processor is further configured to apply a first function when a level 'i' and a level 'j' are adjacent. Herein, for each characteristic set in the 'jth' level, a property is removed and if the remaining properties are found in the 'ith' level, appending the objects and properties of the corresponding characteristic set in the 'ith' level to the corresponding one of the first characteristic set lattice and the second characteristic set lattice. The processor is further configured to apply a second function when the level 'i' and the level 'j' are not adjacent. Herein, for each characteristic set in the 'ith' level, rarest property is identified and if the rarest property is not present in any of the characteristic sets of the 'jth' level, adding the objects and properties of the corresponding characteristic set of the 'jth' level along with the rarest property to the corresponding one of the first characteristic set lattice and the second characteristic set lattice.

In one or more embodiments, for arranging the characteristic sets in the hierarchical order, the processor is further configured to create a virtual null object having all of the properties to be placed at a top of each of the first characteristic set and the second characteristic set and a virtual null object having no property at a bottom of each of the first characteristic set and the second characteristic set.

In one or more embodiments, the comparison function is configured to differentiate between the identified differences at different levels of the hierarchical orders of the respective first characteristic set lattice and the second characteristic set lattice.

In one or more embodiments, the difference report comprises the identified differences in the form of one or more of additions, deletions, and modifications between the first version of the data model and the second version of the data model.

In one or more embodiments, the processor is further configured to generate a lookup table to track a location and/or a nature of the identified differences in the hierarchical orders of the respective first characteristic set lattice and the second characteristic set lattice. Herein, the lookup table records the location and/or the nature of identified differences between the first characteristic set lattice and the second characteristic set lattice.

In one or more embodiments, the processor is executed in a cloud server.

In one or more embodiments, the first version of the data model and the second version of the data model are a first version of a simulation model and a second version of a simulation model respectively. Herein, the difference report comprises an identification of variances in one or more of simulated objects, properties, and outcomes between the first version of the simulation model and the second version of the simulation model.

The object of the present invention is also achieved by a computer program product, comprising computer program code which, when executed by a processor, cause the processor to carry out the method steps described above.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1A: is a first exemplary representation of a data model, in accordance with one or more embodiments of the present invention;
- FIG 1B: is a second exemplary representation of a data model, in accordance with one or more embodiments of the present invention;
- FIG 1C: is a third exemplary representation of a data model, in accordance with one or more embodiments of the present invention;
- FIG 2: is a flowchart representation of a method for managing a data model, in accordance with one or more embodiments of the present invention;
- FIG 3: is a block diagram representation of a system for managing a data model, in accordance with one or more embodiments of the present invention;
- FIG 4: is a representation of a JSON data model generated as part of an intermediate step for generating a characteristic set lattice in a workflow for generating a characteristic set lattice for a data model, in accordance with one or more embodiments of the present invention;
- FIG 5: is a representation of a N-Triple format generated as part of an intermediate step for generating a characteristic set lattice in a workflow for generating a characteristic set lattice for a data model, in accordance with one or more embodiments of the present invention;
- FIG 6: is a representation of an exemplary characteristic set for a data model, in accordance with one or more embodiments of the present disclosure;
- FIG 7: is a representation of an exemplary characteristic set lattice for a data model, in accordance with one or more embodiments of the present disclosure;
- FIG 8: is a schematic diagram representation of a process flow for comparing a first characteristic set lattice to a second characteristic set lattice, in accordance with one or more embodiments of the present invention;
- FIG 9A: is a table providing data from a timing study for file size of a data model against corresponding computation time using the proposed method, in accordance with one or more embodiments of the present invention; and
- FIG 9B: is a graph plotting the data from the timing study for the file size of the data model against corresponding computation time using the proposed method, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method and a system for managing a data model are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In context of the present invention, a data model is presented as a collection of "object-property-subject triples". An object-property-subject triple is a way of structuring data that links an object (a particular entity or item in the model) with a subject (another entity or item) through a property (a defining attribute or relationship). A version of a data model refers to the state of the data model at a particular point in time or stage of development. As modifications are made to the data model (for instance, during the course of development or optimization), each distinct state may be considered a different version. In the present invention, identifying differences between versions of a data model refers to the process of comparing two or more versions of a given data model to determine differences therebetween. These differences may include changes, additions, or deletions made to components of the data model.

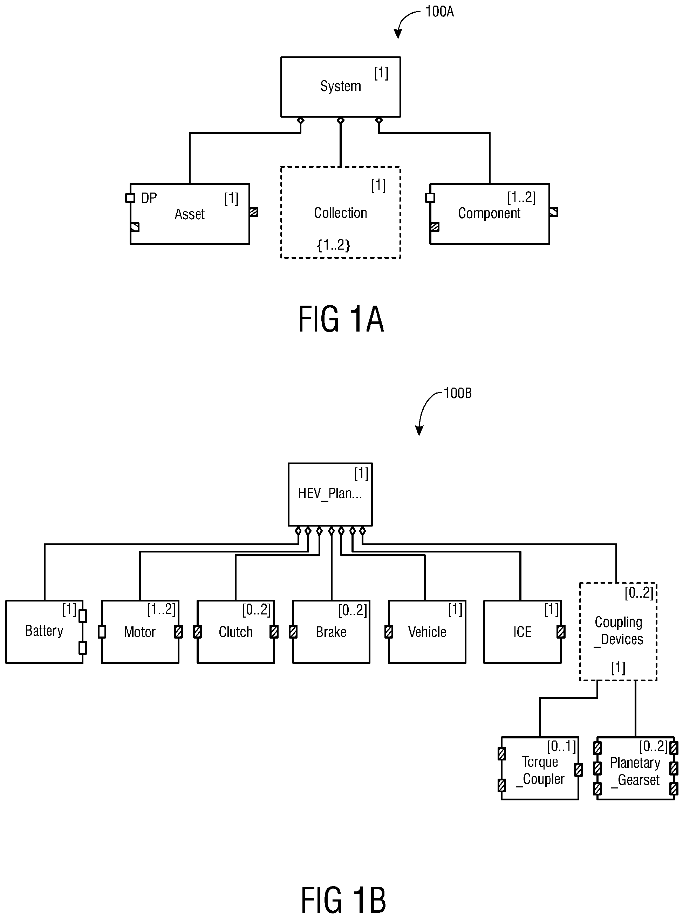

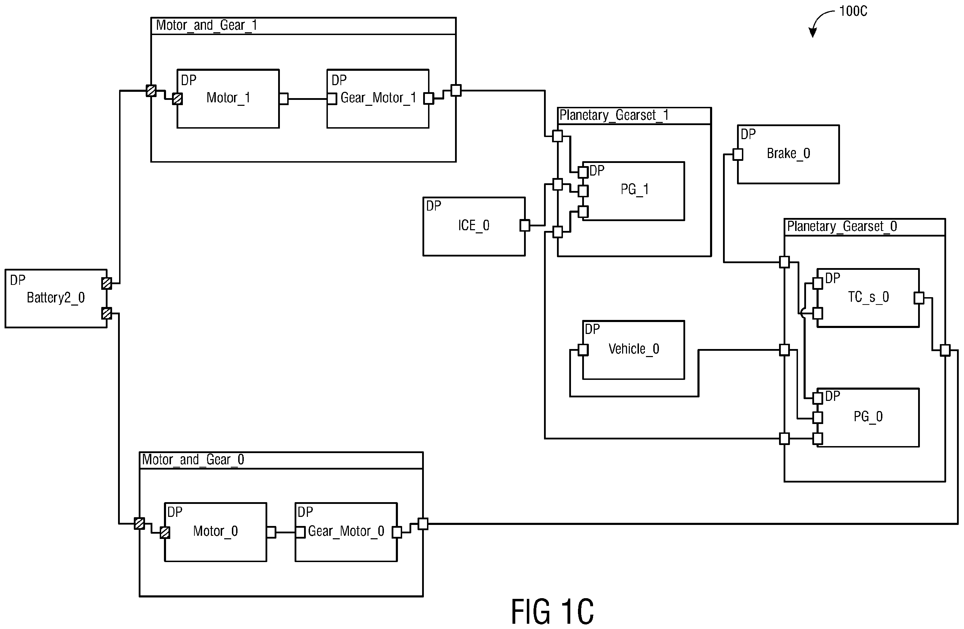

Referring to FIGS 1A-1C, illustrated are exemplary representations of different types of data model. In particular, FIG 1A provides a representation of a data model 100A illustrating a hierarchical structure involving primary elements (referred to as 'children') and secondary elements (referred to as 'sub-children'). In this simplified representation of the data model 100A, only one level of hierarchy exists. The data model 100A may have several versions, each version potentially presenting variations in the included elements. For example, an element might be added or removed, or the value associated with an element might be altered (e.g., a range of {1..2} being changed to {0..0}). FIG 1B and FIG 1C illustrate two distinct data models 100B and 100C, respectively, related to hybrid electric vehicle systems. These data models 100B, 100C are inherently more complex, featuring multiple layers of hierarchy and a multitude of interconnected elements. In real-world scenarios, different versions of such complex models may present numerous changes, with multiple elements being added, removed, rearranged, or modified in other ways. The complexity of these models, and thus the challenges associated with identifying differences between their versions, may be compounded by the nature of collaborative work. It is common for several engineers to contribute to the development of a single model, each introducing unique changes to achieve distinct objectives. As each such modification generates a new version of the data model, the task of identifying differences between the various versions can become significantly more intricate. Accordingly, the present invention provides a robust and systematic process for identifying differences between multiple versions of complex data models, thereby facilitating accurate and efficient change tracking and management, even in highly collaborative environments involving sophisticated data models.

It may be appreciated that the proposed technique of identifying differences between versions of a data model may be important for various reasons. In an example, this technique may be used for validation of changes. For instance, in a collaborative environment, different contributors may make changes to a data model. These changes may be introduced for various reasons like to optimize the data model, address a bug, or update it based on new data or requirements. Understanding the exact changes helps in assessing the validity of these modifications and ensures that they are in line with the desired objectives. In another example, this technique may be used for debugging and problem solving. For instance, when the performance of a data model deteriorates or unexpected results are produced, it may often be due to some changes made in the data model. By comparing the current version of the data model with a previous version that worked as expected, one can identify the changes that led to the issues and address them effectively. Other examples for use of this technique may include tracking evolution of a data model, understand the direction in which the data model is being developed, and make informed decisions about future modifications; for facilitating collaboration by helping collaborators to understand each other's contributions, reducing the chances of miscommunication or redundant work; and the like. In fields like simulations and digital design, these aspects become even more important due to the complexity of data models and the high stakes of correct performance. Therefore, the present invention that can effectively identify differences between versions of a data model, efficiently with scalability and reliability, is required for smooth operations and continued model enhancement.

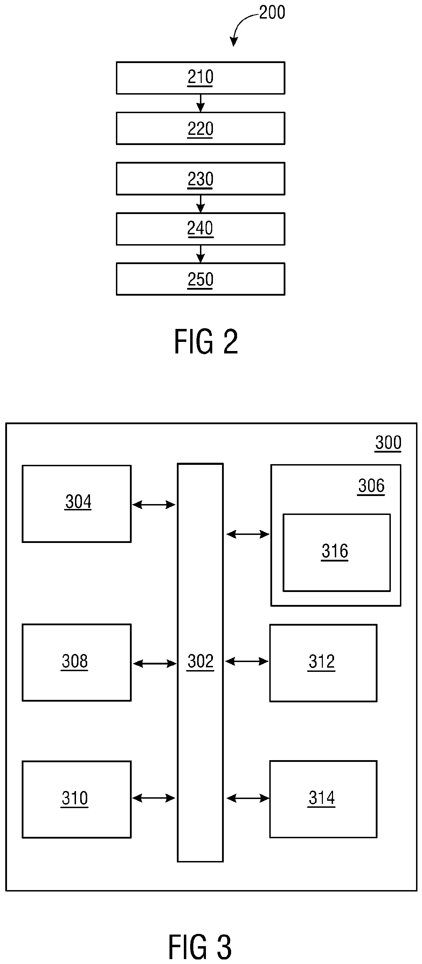

Referring now to FIG 2, illustrated is a flowchart of a method (as represented by reference numeral 200) for managing a data model, in accordance with an embodiment of the present invention. Referring to FIG 3, illustrated is a block diagram of a system 300 for managing a data model, in accordance with one or more embodiments of the present invention. The various steps of the method 200 for managing a data model, as described later in the description, may be executed in the system 300. For purposes of the present invention, the present method 200 is embodied as a diffing algorithm for identifying differences between versions of a data model, with the two terms being interchangeably used hereinafter. It may be appreciated that although the method 200 is illustrated and described as a sequence of steps, it may be contemplated that various embodiments of the method 200 may be performed in any order or a combination and need not include all of the illustrated steps.

It may be appreciated that the system 300 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 300 may be embodied as a computer-program product 300 programmed for performing the said purpose. The system 300 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 300 includes a communication mechanism such as a bus 302 for passing information among the components of the system 300. The system 300 includes a processor 304 and a memory 306. Herein, the memory 306 is communicatively coupled to the processor 304. In an example, the memory 306 may be embodied as a computer readable medium on which program code sections of a computer program are saved, the program code sections being loadable into and/or executable in a system to make the system 300 execute the steps for performing the said purpose.

Generally, as used herein, the term "processor" refers to a computational element that is operable to respond to and processes instructions that drive the system 300. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 300.

Herein, the memory 306 may be volatile memory and/or non-volatile memory. The memory 306 may be coupled for communication with the processor 304. The processor 304 may execute instructions and/or code stored in the memory 306. A variety of computer-readable storage media may be stored in and accessed from the memory 306. The memory 306 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 304 has connectivity to the bus 302 to execute instructions and process information stored in the memory 306. The processor 304 may include one or more processing cores with each core configured to perform independently. A multi-core processor enables multiprocessing within a single physical package. Examples of a multi-core processor include two, four, eight, or greater numbers of processing cores. Alternatively, or in addition, the processor 304 may include one or more microprocessors configured in tandem via the bus 302 to enable independent execution of instructions, pipelining, and multithreading. The processor 304 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 300 may further include an interface 308, such as a communication interface (with the said terms being interchangeably used) which may enable the system 300 to communicate with other systems for receiving and transmitting information. The communication interface 308 may include a medium (e.g., a communication channel) through which the system 300 communicates with other system. Examples of the communication interface 308 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 308 may include one or more of a wired connection, a wireless network, cellular networks such as 2G, 3G, 4G, 5G mobile networks, and a Zigbee connection.

The system 300 also includes a database 310. As used herein, the database 310 is an organized collection of structured data, typically stored in a computer system and designed to be easily accessed, managed, and updated. The database 310 may be in form of a central repository of information that can be queried, analysed, and processed to support various applications and business processes. In the system 300, the database 310 provides mechanisms for storing, retrieving, updating, and deleting data, and typically includes features such as data validation, security, backup and recovery, and data modelling.

The system 300 further includes an input device 312 and an output device 314. The input device 312 may take various forms depending on the specific application of the system 300. In an example, the input device 312 may include one or more of a keyboard, a mouse, a touchscreen display, a microphone, a camera, or any other hardware component that enables the user to interact with the system 300. Further, the output device 314 may be in the form of a display. It is to be understood that, when reference is made in the present invention to the term "display" this refers generically either to a display screen on its own or to the screen and an associated housing, drive circuitry and possibly a physical supporting structure, of which all, or part of is provided for displaying information.

In the present system 300, the processor 304 and accompanying components have connectivity to the memory 306 via the bus 302. The memory 306 includes both dynamic memory (e.g., RAM, magnetic disk, writable optical disk, etc.) and static memory (e.g., ROM, CD-ROM, etc.) for storing executable instructions that when executed perform the method steps described herein for managing a data model. In particular, the memory 306 includes a module arrangement 316 to perform steps for managing a data model. Also, in the system 300, the memory 306 may be configured to store the data associated with or generated by the execution of the inventive steps.

In embodiments of the present invention, at step 210, the method 200 includes obtaining, by the processor 304, a first version of the data model and a second version of the data model, wherein each of the first version of the data model and the second version of the data model comprises a collection of object-property-subject triples. That is, the process is initiated by obtaining two distinct versions of a data model. The version of the data model, in this context, is a specific instance or snapshot of the data model, capturing all its elements and their relationships at a particular point in time or under certain conditions. These versions may correspond to initial and modified versions of the data model, or they may represent two alternative modifications of a common base version of the data model. The first version of the data model and the second version of the data model are obtained by the processor 304 either from the memory 306, or from the database 310, of the system 300 used to create and manage the data model.

Herein, the object-property-subject triples form the building blocks of the data model. Each triple represents a relationship between a subject and an object, characterized by a specific property. The 'subject' is a primary entity in the data model, the 'object' is another entity that is related to the subject, and the 'property' defines the nature or context of their relationship. For instance, in the data model of a vehicle system, a 'subject' may be a specific component of the vehicle (like the engine), an 'object' may be another component related to the subject (like a fuel injector), and a 'property' may represent the type of relationship between them (like 'connected to'). These triples are extracted from the data model versions, providing a systematic representation of the elements in the data model and their relationships.

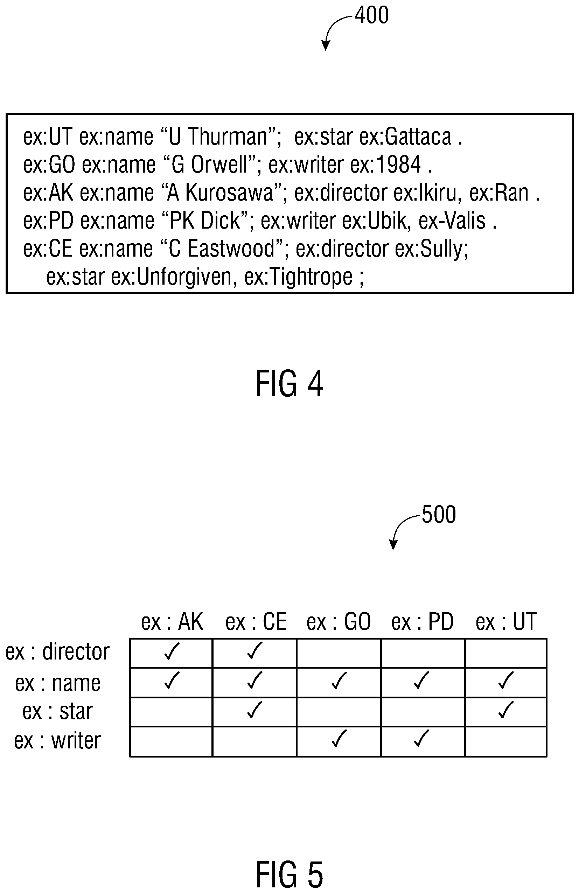

In implementation of the step 210 of the method 200, the data model may first be converted into a JSON data model 400 (as depicted in FIG 4) which may be used as an input for the further process. JSON, or JavaScript Object Notation, is a popular data interchange format which is easy to read and write. The method 200 may further involve an intermediate step with some initial pre-processing which may include conversion of the JSON data model 400 to an N-Triple format 500 (as depicted in FIG 5). N-Triple is a format used to represent data in RDF (Resource Description Framework) model, which uses triples to express data in the form of subject-predicate-object, much like the object-property-subject triples in context of the present invention.

The N-Triple format 500 provides a clear and simplified approach for representing complex data relations. In the N-Triple format 500, each line corresponds to exactly one triple (object, property, subject). For example, a JSON data model representing a vehicle system may have entries like {"Engine":{"FuelType": "Gasoline", "Horsepower": 150}}. This would be converted to N-Triple format as two separate lines, one being "Engine">>>>FuelType>>>>Gasoline and another being "Engine">>>>Horsepower>>>>150. This format provides an explicit way to break down complex JSON structures into distinct triples, enabling effective analysis and comparison later.

Once the conversion to the N-Triple format is complete, the method 200 proceeds to the removal of duplicate triples. This process is employed for the elimination of redundant information, streamlining the data models, and making subsequent processes more efficient. It may be appreciated that duplicates do not contribute to the differences between versions of the data model, and therefore, removing them will not affect the final outcome of the method 200 but may reduce the computation time and resources required. Thus, any triples that appear more than once in the data model are identified, and the redundant copies are removed, leaving only unique triples for the following steps in the method 200.

At step 220, the method 200 includes extracting, by the processor 304, characteristic sets from each of the first version of the data model and the second version of the data model, wherein each characteristic set groups objects sharing a common set of properties. Herein, each characteristic set is defined as a group of objects from the data model that share a common set of properties. As discussed, in the context of the data model, an 'object' refers to a distinct element or entity in the model, and a 'property' denotes a specific attribute, quality, or relationship that the object has or participates in. The extraction process begins by systematically examining each object-property-subject triple obtained from versions of the data model. The properties associated with each object are identified and grouped together, creating an initial mapping of objects to properties.

Next, the groups of objects that share the exact same set of properties are identified. For each unique set of properties identified, all objects associated with that property set are collected and forms a characteristic set. The output of the step 220 is a collection of characteristic sets for each version of the data model, where each characteristic set captures a group of objects that have identical properties.

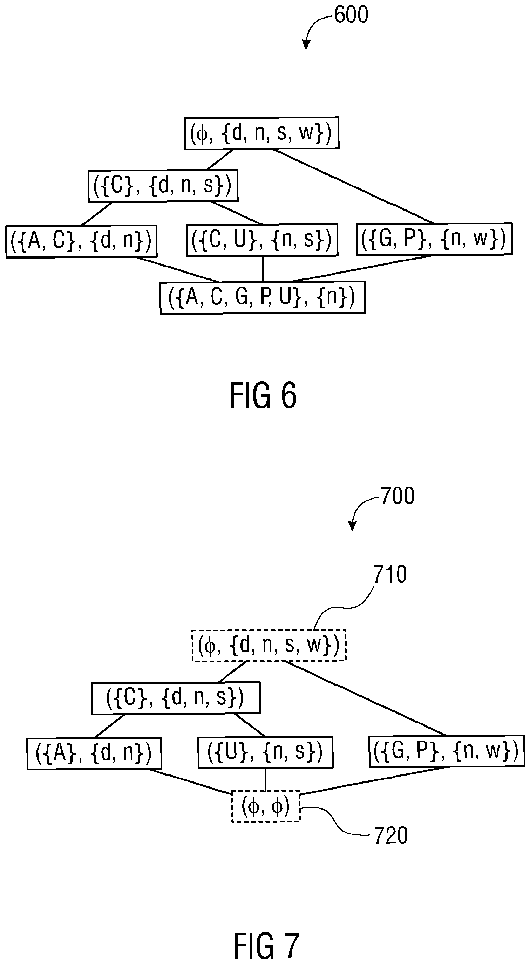

FIG 6 illustrates an exemplary characteristic set 600 for a data model, in accordance with one or more embodiments of the present disclosure. Herein, the characteristic set 600 is a collection or group of subjects /objects within the data model that share a common set of properties. In this context, subjects /objects are the entities in the data model that are to be compared between different versions of the data model, and properties are the specific characteristics or features that define these entities. Each of these groups forms a characteristic set, providing a way to categorize or cluster subjects/objects based on their shared properties. This process repeats until all subjects/objects that share a specific set of properties have been grouped, forming multiple characteristic sets across the entire data model. By extracting these characteristic sets, the method 200 reduces the complexity of the data model, focusing on the shared properties of objects, which may be used in identifying and understanding differences between versions of the data model. This structured representation not only simplifies the subsequent comparison process but also enables to capture and highlight meaningful differences that are significant in the context of design and usage of the data model.

Thereby, in the method 200, the step 220 involving extraction process enables a structured representation of the data models that may be compared effectively. It may be appreciated by a person skilled in the art that the underlying logic for forming the characteristic sets is that the number of unique subjects in a data model typically significantly exceeds the number of unique properties. By grouping subjects that share the same properties, it may be possible to simplify the data model and make the process of comparing different versions of the data model more manageable and efficient. In the present embodiments, the extraction of characteristic sets may be performed using various algorithmic approaches such as hash-based lookup techniques, which offer efficiency in handling large data models.

At step 230, the method 200 includes arranging, by the processor 304, the characteristic sets for each of the first version of the data model and the second version of the data model in a respective hierarchical order, wherein the characteristic sets sharing a relatively greater number of properties are placed higher in the corresponding hierarchical order and the characteristic sets sharing a relatively lesser number of properties are placed lower in the corresponding hierarchical order, forming a first characteristic set lattice and a second characteristic set lattice respectively. This organization of the characteristic sets into a hierarchy, or a lattice, forms the basis for a structured comparison between the two versions of the data model. The hierarchy is created based on the number of shared properties within each characteristic set. Characteristic sets sharing a relatively greater number of properties are placed higher in the hierarchical order, and the ones sharing a relatively lesser number of properties are placed lower. This structure is defined based on the principle that a set of objects with more shared properties has a higher level of commonality, and therefore it is considered to be more significant in the context of the data model.

FIG 7 illustrates an exemplary characteristic set lattice 700 for a data model, in accordance with one or more embodiments of the present disclosure. This organization of the characteristic sets into a hierarchy, or a lattice, is implemented for a structured comparison between the two versions of the data model. To establish this hierarchy, first the number of properties in each characteristic set for each version of the data model is counted. Then, the characteristic sets based on these counts are sorted in a descending order. This creates two separate lattices - the first characteristic set lattice for the first version of the data model, and the second characteristic set lattice for the second version of the data model. In each lattice, the characteristic sets are organized in a tiered structure, where each tier corresponds to a unique count of shared properties. Characteristic sets on the same tier share the same number of properties, and there is a parent-child relationship between the sets on adjacent tiers, where a parent set on a higher tier shares more properties than its child sets on the lower tier.

In an embodiment, arranging the characteristic sets in the hierarchical order further comprises: applying, by the processor 304, a first function when a level 'i' and a level 'j' are adjacent, wherein for each characteristic set in the 'jth' level, a property is removed and if the remaining properties are found in the 'ith' level, appending the objects and properties of the corresponding characteristic set in the 'ith' level to the corresponding one of the first characteristic set lattice and the second characteristic set lattice; and applying, by the processor 304, a second function when the level 'i' and the level 'j' are not adjacent, wherein for each characteristic set in the 'ith' level, rarest property is identified and if the rarest property is not present in any of the characteristic sets of the 'jth' level, adding the objects and properties of the corresponding characteristic set of the 'jth' level along with the rarest property to the corresponding one of the first characteristic set lattice and the second characteristic set lattice. That is, the process of arranging the characteristic sets in a hierarchical order involves more intricate steps to ensure that the hierarchy accurately reflects the commonality of properties within the data model. These steps involve two different functions that are applied based on the relationship between two levels, 'i' and 'j', in the hierarchy.

The first function is applied when the levels 'i' and 'j' are adjacent, i.e., they follow each other directly in the hierarchy. For every characteristic set in the 'jth' level, a property is removed from the characteristic set. If the remaining properties are found in a characteristic set in the 'ith' level, then the objects and properties of that 'ith' level characteristic set are appended to the corresponding characteristic set in the lattice. This effectively merges the two characteristic sets, preserving the shared properties and enhancing the hierarchical structure. The second function is used when the levels 'i' and 'j' are not directly adjacent. In this scenario, for each characteristic set in the 'ith' level, the rarest property is identified, i.e., the property that is least common among all the objects within the characteristic set. If this rare property is not present in any of the characteristic sets of the 'jth' level, then the objects and properties of the corresponding 'jth' level characteristic set, along with the identified rare property, are added to the corresponding characteristic set in the characteristic lattice.

In an embodiment, arranging the characteristic sets in the hierarchical order further comprises creating, by the processor 304, a virtual null object having all of the properties to be placed at a top of each of the first characteristic set and the second characteristic set and a virtual null object having no property at a bottom of each of the first characteristic set and the second characteristic set. That is, the method 200 includes creating virtual null objects to represent the extremes of the property spectrum. Herein, as illustrated in FIG 7, a first virtual null object 710 is a hypothetical entity that is assumed to possess all the properties found in the data model. The first virtual null object 710 is placed at the very top of each characteristic set lattice, i.e., the structured hierarchy of the characteristic sets, for both the first and the second versions of the data model. On the other end, a second virtual null object 720 is created that possesses no properties; or in other words, it doesn't share any properties with any objects. The second virtual null object 720 is placed at the bottom of each characteristic set lattice, the lowest possible level in the hierarchical structure, which represents the absence of shared properties. Together, the two virtual null objects 710, 720 aid in comparing the characteristic lattices of the two versions of the data model, facilitating systematic identification of differences therebetween.

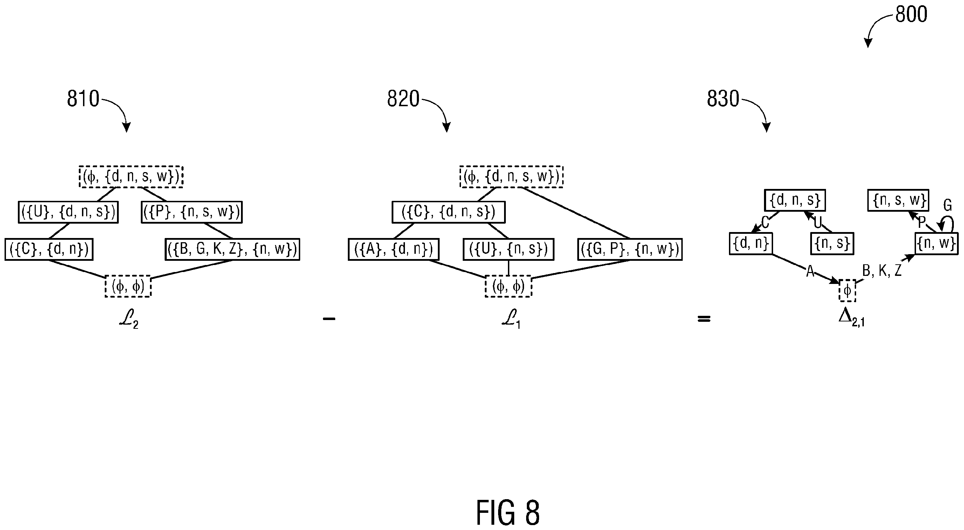

At step 240, the method 200 includes comparing, by the processor 304, the first characteristic set lattice to the second characteristic set lattice by using a comparison function for identifying differences between the first version of the data model and the second version of the data model. Referring to FIG 8, illustrated is a process flow (as represented by reference numeral 800) for comparing a first characteristic set lattice 810 (also represented as L₁) to a second characteristic set lattice 820 (also represented as L₂), in accordance with one or more embodiments of the present disclosure. Herein, the process of identifying differences between the first and the second versions of the data model involves comparing the first characteristic set lattice 810 to the second characteristic set lattice 820. This comparison is achieved using the comparison function designed to analyse the characteristic set lattices 810, 820 at each corresponding level. Specifically, the comparison function goes through each level of the first and second characteristic set lattices 810, 820, and examines each characteristic set at a given level in the first characteristic set lattice 810 and seeks to match it with a characteristic set at the corresponding level in the second characteristic set lattice 820, and vice versa. The characteristic sets are compared based on their properties and the objects they group. If there is a characteristic set in the first characteristic set lattice 810 that may not have a match in the second characteristic set lattice 820, it implies that there is a difference between the two versions of the data model for the objects and properties grouped in that characteristic set. The comparison (diffing) function iterates through each lattice formed for the two versions of the data model and checks if there are any additions/deletions or modifications to the objects or properties.

As shown, a resultant of comparing the first characteristic set lattice 810 to the second characteristic set lattice 820 is realized as a directed, edge-labelled graph 830 (also represented as Δ_{2,1}). The graph 830 captures the changes that have emerged between the two versions of the data model, providing a visual representation of how the data has evolved. The nodes in the graph 830 represent the characteristic sets derived from each version of the data model. The edges in the graph 830 that connect these nodes are labelled with specific information and carry information about the entities that transition or move from one characteristic set to another between the first and the second version of the data model. Thereby, the graph 830 serves as a tool for understanding the changes that have occurred from one version to another of the data model.

In an embodiment, the comparison function is configured to differentiate between the identified differences at different levels of the hierarchical orders of the respective first characteristic set lattice and the second characteristic set lattice. Herein, as discussed, the hierarchical order is a structure where the characteristic sets with more shared properties are placed higher, and the characteristic sets with fewer shared properties are positioned lower. This structure is formed for both the first version and the second version of the data model, leading to the formation of the first and second characteristic set lattices, respectively. According to the present embodiment, the comparison function is designed to recognize and differentiate the changes that have taken place at different levels within these hierarchical orders. These differences may include, but are not limited to, the addition, removal, or modification of object-property-subject triples within the characteristic sets at each level.

At step 250, the method 200 includes generating and outputting, by the processor 304, via the output device 314, a difference report based on the comparison. That is, after the first and second characteristic set lattices have been compared using the comparison function, the resulting information is used to generate the difference report that outlines the identified differences between the two versions of the data model. The generation of the difference report involves compiling and structuring the changes identified by the comparison function, and outputting it in a readable and easily understandable format. In the present embodiments, the difference report may be outputted by the processor 304 to be displayed on the output device 314. Herein, the form in which the difference report is displayed may vary, including, but not limited to, a text report, a visual graph, a diagram, or a combination thereof.

The difference report may include each unique difference identified between corresponding characteristic sets in the first and second versions of the data model, including the addition or removal of objects or properties within a characteristic set, or alterations to the relationships between objects and properties therein. The difference report provides a detailed breakdown of the differences, helping users understand what changes have been made between the versions of the data model. In an example, for easier referencing, the difference report may assign a unique identifier to each change identified in the comparison process, which may be used to quickly locate and understand specific differences within versions of the data model.

In an embodiment, the difference report comprises the identified differences in the form of one or more of additions, deletions, and modifications between the first version of the data model and the second version of the data model. Herein, the "additions" in the difference report signify the new object-property-subject triples or characteristic sets that have been introduced, for instance, in the second version of the data model but were not present in the first version. The "deletions" refer to the object-property-subject triples or characteristic sets that, for instance, were present in the first version of the data model but are absent in the second version. The "modifications" are those changes where, for instance, an existing object-property-subject triple or characteristic set in the first version has been altered in some way in the second version. This could involve changes to the objects, properties, or subjects involved in the triples or to the composition of the characteristic sets. For example, in a data model representing a simulation of a Hybrid Electric Vehicle (HEV) system in which the first version of the data model includes characteristics sets representing parameters such as battery capacity, electric motor efficiency, and power control unit settings, and in the second version of the data model, an engineer introduces a new characteristic set related to regenerative braking efficiency (an addition), removes the power control unit settings (a deletion), and changes the values of battery capacity (a modification); in such case, the difference report may clearly list these changes, providing an easy-to-understand overview of the edits made between the two versions of simulation of the HEV system.

In an embodiment, the method 200 further comprises generating, by the processor 304, a lookup table to track a location and/or a nature of the identified differences in the hierarchical orders of the respective first characteristic set lattice and the second characteristic set lattice, wherein the lookup table records the location and/or the nature of identified differences between the first characteristic set lattice and the second characteristic set lattice. Such lookup table aids in the efficient identification, tracking, and management of differences between the first and second characteristic set lattices. The lookup table may act as an index or map that directly corresponds to the hierarchical structure of the lattices, recording the location and nature of identified differences. In an example, each entry in the lookup table may be associated with a specific location in the hierarchical order of the characteristic set lattices, and these locations may correspond to specific nodes or levels within the lattice hierarchy. Further, the lookup table may catalogue the specific nature of each difference. Thereby, the lookup table may facilitate quick and efficient identification of changes, as well as their impact on the data model, by providing a way to map the changes directly to their locations within the hierarchical structure.

As discussed, the steps 210-250 of the method 200 may be executed in the system 300, or specifically the processor 304 of the system 300. Specifically, the step 210, which corresponds to obtaining the first and second versions of the data model, involves fetching or loading the data models into the system 300. This step 210 may involve receiving file(s) from the input device 312, querying the database 310, or receiving the data over the network. The processor 304, together with other components of the system 300, handles this data loading. The step 220, which corresponds to extracting the characteristic sets from each version of the data model, may involve the processor 304 iterating through the data models, identifies objects that share common properties, and groups them together into characteristic sets. This step 220 may also involve operations such as sorting, filtering, or mapping, all of which may be handled by the processor 304. The step 230, which involves arranging the characteristic sets into a hierarchical order to form the characteristic set lattice, may involve the processor 304 for sorting the characteristic sets based on the number of shared properties, constructing a data structure to represent the lattice, and inserting the characteristic sets into their appropriate places in this structure. The step 240, which involves comparing the first and second characteristic set lattices to identify differences, may involve the processor 304 for iterating through the lattices, applying the comparison function to corresponding pairs of characteristic sets, and recording the differences found. The step 250, which involves generating the difference report, may involve the processor 304 to output the difference report using the output device 314.

In an embodiment, the processor 304 is executed in a cloud server. That is, the various operations associated with the method 200 are performed by the processor 304 located in a cloud server, part of a remote computing environment. The cloud server provides scalable, secure and reliable computational resources on demand, and may be configured to provide varying levels of performance, based on the specific requirements of the application. In such configurations, the data models and associated operations of the method 200 are carried out on the cloud server. Specifically, the processor 304 on the cloud server executes the tasks involved in the method 200, obtaining the data models, extracting characteristic sets, arranging these sets into lattices, and comparing these lattices to identify differences. The cloud server high-performance processor carries out these tasks quickly and efficiently , allowing for considerable computational power and scalability. Furthermore, executing the processor 304 in the cloud server also facilitates collaboration. As the data models and the difference results are stored in the cloud, they can be accessed and worked upon from any location. This enables collaborative work on the data models, with changes made by any user being immediately visible to all others.

In an embodiment of the present invention, the first version of the data model and the second version of the data model are a first version of a simulation model and a second version of a simulation model respectively, and wherein the difference report comprises an identification of variances in one or more of simulated objects, properties, and outcomes between the first version of the simulation model and the second version of the simulation model. It may be understood that a simulation model is a computational construct that represents the behaviour or characteristics of a real or proposed system. For example, these models may be designed to replicate real-world phenomena or processes, such as climate dynamics, financial systems, or even vehicle behaviour. Given the complexity of these models, differences in their various versions may occur in a variety of elements. These include the objects represented in the simulation (e.g., different types of vehicles in a traffic simulation), the properties assigned to these objects (e.g., the maximum speed of each vehicle), and the outcomes produced by the simulation (e.g., traffic flow rates under different conditions).

In an example for simulation of automobile design, the first version of the simulation model may represent an initial car design, while the second version reflects adjustments made, like a more aerodynamic shape or an improved engine. The difference report, as per the present invention, may identify these changes between the two versions. Herein, the difference report may highlight the new aerodynamic design and engine as 'variances' and may also indicate how these alterations impact the car's performance, such as improved speed or fuel efficiency. This provides designers with a comprehensive view of the modifications made and their implications on the overall design.

In this instance, the present method 200 extracts characteristic sets from both the first and second version of the simulation model. The characteristic sets group the simulation objects based on shared properties. Following this, the method 200 arranges these sets in a hierarchical order, forming a characteristic lattice for each version. A comparison function then identifies differences between these characteristic lattices, which represent differences between the two versions of the simulation model. The difference report subsequently generated provides an identification of variances in one or more of the simulated objects, properties, and outcomes. This may include additions, deletions, and modifications between the two versions. For instance, a new object may be introduced in the second version of the simulation, a property of an existing object might have been modified, or the simulation's outcomes may be different due to changes in the parameters or structure of the data model.

The following details provide a validation study performed to demonstrate the efficiency and scalability of the method 200 in accordance with one or more embodiments of the present disclosure. A series of tests were conducted to evaluate the performance of the method 200 as implemented in the present invention. The proposed diffing technique of the method 200 was compared with existing text-based diffing and tree-based diffing methods. The results show that the proposed diffing technique has a more favourable dependency between file complexity and computation time.

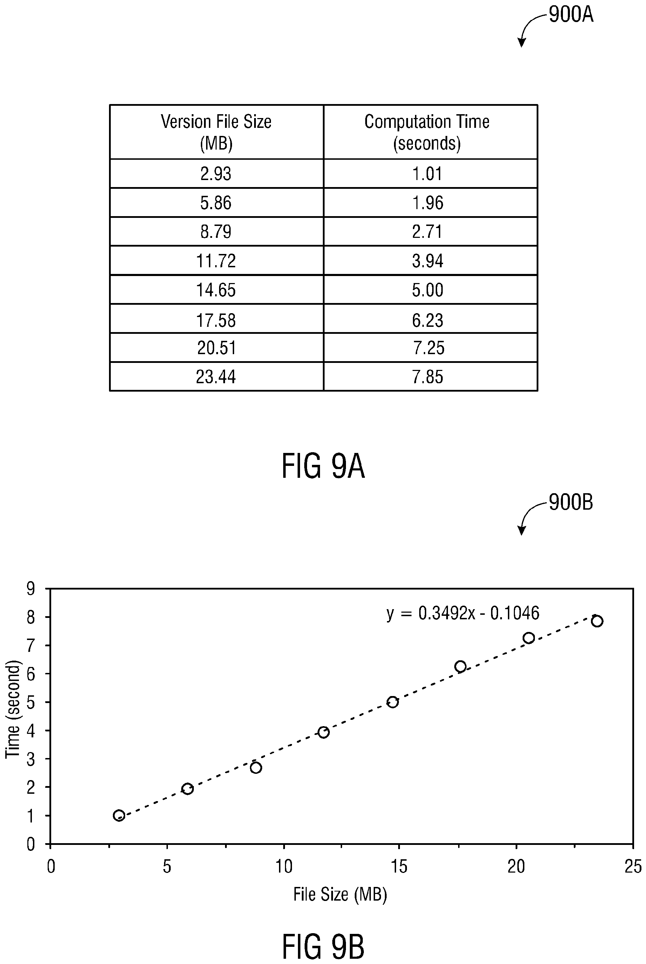

Referring to FIG 9A, illustrated is a table 900A providing data from a timing study for file size of a data model against corresponding computation time using the method 200, in accordance with one or more embodiments of the present invention. Further, FIG 9B is a graph 900B plotting the data from the timing study for the file size of the data model against corresponding computation time using the method 200, in accordance with one or more embodiments of the present invention. The performance tests showed that extrapolating from the obtained results, the diffing technique based on the present method 200 may be able to identify differences between a pair of 500MB files in approximately 3 minutes. In contrast, a tree-based diffing tool like Graphtage requires over 3 hours to process files of less than 10MB, which exemplifies the significant performance improvement offered by the present invention. Further, as part of the validation process, several data model files, each representing different simulation parameters related to a hybrid electric vehicle platform, were selected. This dataset was used to generate approximately 65 pairs of files, with each pair exhibiting different levels of differences. The results from this comprehensive testing process shows that the total time required by the diffing technique based on the present method 200 to individually process the 65 pairs of files was approximately 5 seconds. This translates to an average time of about 0.45 seconds to process each pair of files, significantly faster than any of the existing diffing techniques.

The computation time of the diffing technique based on the present method 200 is primarily dependent on the input file size of the two versions as well as the number of differences between them. However, it circumvents a traditional line-by-line comparison, instead extracting subject, property, and object triples from the initial data and utilizing this processed data to calculate the differences. This streamlined approach saves substantial computation time and allows the complex input data to be compacted into a manageable lattice structure representation. Industries handling large data models frequently find multiple individuals working on the same model, resulting in numerous versions with varying outcomes when run through simulations, analytics, and other processes. The proposed diffing technique based on the present method offers near-instantaneous results, providing a significant advantage for teams running simulations and cross-checking their data with successful prior outcomes.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A computer-implemented method (200) for managing a data model (100A-100C), the method (200) comprising:
obtaining, by a processor (304), a first version of the data model (100A-100C) and a second version of the data model (100A-100C), wherein each of the first version of the data model (100A-100C) and the second version of the data model (100A-100C) comprises a collection of object-property-subject triples;
extracting, by the processor (304), characteristic sets (600) from each of the first version of the data model (100A-100C) and the second version of the data model (100A-100C), wherein each characteristic set (600) groups objects sharing a common set of properties;
arranging, by the processor (304), the characteristic sets (600) for each of the first version of the data model (100A-100C) and the second version of the data model (100A-100C) in a respective hierarchical order, wherein the characteristic sets (600) sharing a relatively greater number of properties are placed higher in the corresponding hierarchical order and the characteristic sets (600) sharing a relatively lesser number of properties are placed lower in the corresponding hierarchical order, forming a first characteristic set lattice (810) and a second characteristic set lattice (820) respectively;
comparing, by the processor (304), the first characteristic set lattice (700) to the second characteristic set lattice (700) by using a comparison function for identifying differences between the first version of the data model (100A-100C) and the second version of the data model (100A-100C); and
generating and outputting, by the processor (304), via an output device (314), a difference report based on the comparison.

2. The method (200) according to claim 1, wherein arranging the characteristic sets (600) in the hierarchical order further comprises:
applying, by the processor (304), a first function when a level 'i' and a level 'j' are adjacent, wherein for each characteristic set (600) in the 'jth' level, a property is removed and if the remaining properties are found in the 'ith' level, appending the objects and properties of the corresponding characteristic set (600) in the 'ith' level to the corresponding one of the first characteristic set lattice (700) and the second characteristic set lattice (700); and
applying, by the processor (304), a second function when the level 'i' and the level 'j' are not adjacent, wherein for each characteristic set (600) in the 'ith' level, rarest property is identified and if the rarest property is not present in any of the characteristic sets (600) of the 'jth' level, adding the objects and properties of the corresponding characteristic set (600) of the 'jth' level along with the rarest property to the corresponding one of the first characteristic set lattice (700) and the second characteristic set lattice (700).

3. The method (200) according to any of the preceding claims, wherein arranging the characteristic sets (600) in the hierarchical order further comprises creating, by the processor (304), a virtual null object (710) having all of the properties to be placed at a top of each of the first characteristic set (600) and the second characteristic set (600) and a virtual null object (720) having no property at a bottom of each of the first characteristic set (600) and the second characteristic set (600).

4. The method (200) according to any of the preceding claims, wherein the comparison function is configured to differentiate between the identified differences at different levels of the hierarchical orders of the respective first characteristic set lattice (700) and the second characteristic set lattice (700).

5. The method (200) according to any of the preceding claims, wherein the difference report comprises the identified differences in the form of one or more of additions, deletions, and modifications between the first version of the data model (100A-100C) and the second version of the data model (100A-100C).

6. The method (200) according to any of the preceding claims, further comprising generating, by the processor (304), a lookup table to track a location and/or a nature of the identified differences in the hierarchical orders of the respective first characteristic set lattice (700) and the second characteristic set lattice (700), wherein the lookup table records the location and/or the nature of identified differences between the first characteristic set lattice (700) and the second characteristic set lattice (700).

7. A system (300) for managing a data model (100A-100C), the system (300) comprising:
an input module configured to obtain a first version of the data model (100A-100C) and a second version of the data model (100A-100C), wherein each of the first version of the data model (100A-100C) and the second version of the data model (100A-100C) comprises a collection of object-property-subject triples; and
a processor (304) configured to:
extract characteristic sets (600) from each of the first version of the data model (100A-100C) and the second version of the data model (100A-100C), wherein each characteristic set (600) groups objects sharing a common set of properties;
arrange the characteristic sets (600) for each of the first version of the data model (100A-100C) and the second version of the data model (100A-100C) in a respective hierarchical order, wherein the characteristic sets (600) sharing a relatively greater number of properties are placed higher in the corresponding hierarchical order and the characteristic sets (600) sharing a relatively lesser number of properties are placed lower in the corresponding hierarchical order, forming a first characteristic set lattice (810) and a second characteristic set lattice (820) respectively;
compare the first characteristic set lattice (700) to the second characteristic set lattice (700) by using a comparison function for identifying differences between the first version of the data model (100A-100C) and the second version of the data model (100A-100C); and
generate and output a difference report based on the comparison.

8. The system (300) according to claim 7, wherein for arranging the characteristic sets (600) in the hierarchical order, the processor (304) is further configured to:
apply a first function when a level 'i' and a level 'j' are adjacent, wherein for each characteristic set (600) in the 'jth' level, a property is removed and if the remaining properties are found in the 'ith' level, appending the objects and properties of the corresponding characteristic set (600) in the 'ith' level to the corresponding one of the first characteristic set lattice (700) and the second characteristic set lattice (700); and
apply a second function when the level 'i' and the level 'j' are not adjacent, wherein for each characteristic set (600) in the 'ith' level, rarest property is identified and if the rarest property is not present in any of the characteristic sets (600) of the 'jth' level, adding the objects and properties of the corresponding characteristic set (600) of the 'jth' level along with the rarest property to the corresponding one of the first characteristic set lattice (700) and the second characteristic set lattice (700).

9. The system (300) according to any of the preceding system based claims, wherein for arranging the characteristic sets (600) in the hierarchical order, the processor (304) is further configured to create a virtual null object (710) having all of the properties to be placed at a top of each of the first characteristic set (600) and the second characteristic set (600) and a virtual null object (720) having no property at a bottom of each of the first characteristic set (600) and the second characteristic set (600).

10. The system (300) according to any of the preceding system based claims, wherein the processor (304) is further configured to generate a lookup table to track a location and/or a nature of the identified differences in the hierarchical orders of the respective first characteristic set lattice (700) and the second characteristic set lattice (700), wherein the lookup table records the location and/or the nature of identified differences between the first characteristic set lattice (700) and the second characteristic set lattice (700).

11. The system (300) according to any of the preceding system based claims, wherein the comparison function is configured to differentiate between the identified differences at different levels of the hierarchical orders of the respective first characteristic set lattice (700) and the second characteristic set lattice (700).

12. The system (300) according to any of the preceding system based claims, wherein the difference report comprises the identified differences in the form of one or more of additions, deletions, and modifications between the first version of the data model (100A-100C) and the second version of the data model (100A-100C) .

13. The system (300) according to any of the preceding system based claims, wherein the processor (304) is executed in a cloud server.

14. The system (300) according to any of the preceding system based claims, wherein the first version of the data model (100A-100C) and the second version of the data model (100A-100C) are a first version of a simulation model and a second version of a simulation model respectively, and wherein the difference report comprises an identification of variances in one or more of simulated objects, properties, and outcomes between the first version of the simulation model and the second version of the simulation model.

15. A computer program product, comprising computer program code which, when executed by a processor (304), cause the processor (304) to carry out the method (200) of any of the claims 1 to 6.
